# EUROPEAN PATENT APPLICATION

(11) **EP 2 196 525 A1**
(43) Date of publication of application: **16.06.2010**
(21) Application number: 08829159.6
(22) Date of filing: 01.09.2008
(51) Int. Cl.: C11B 9/00

(54) **JASMINUM SAMBAC-LIKE FRAGRANCE COMPOSITION**

(30) Priority: 04.09.2007 JP 2007228651
(71) Applicant: Shiseido Company, Ltd., Chuo-ku Tokyo 104-8010 (JP)
(72) Inventor: JOUICHI, Atushi, Yokohama-shi Kanagawa 224-8558 (JP); TERAJIMA, Yushi, Yokohama-shi Kanagawa 224-8558 (JP); HORITA, Tatsushi, Yokohama-shi Kanagawa 224-8558 (JP); MATSUKI, Atsushi, Osaka-shi Osaka 532-0027 (JP); TSUIHIJI, Tamotsu, Osaka-shi Osaka 532-0027 (JP)
(74) Representative: Lippert, Stachow & Partner
(86) International application number: PCT/JP2008/065696
(87) International publication number: WO 2009/031505

(57) **Abstract**

The present invention provides a flavor and/or fragrance composition having a natural scent of Jasminum sambac, which is **characterized by** adding at least one ingredient selected from the group consisting of 3,7-dimethyl-1,5-octadiene-3,7-diol, 2,6-dimethyl-1,7-octadiene-3,6-diol, and dehydrolinalool to a base composition having, as a keynote, Jasminum sambac flower-like scent. The total amount of the scent ingredients is preferably 0.01 to 20 % by mass of the whole flavor and/or fragrance composition.

## Description

### RELATED APPLICATIONS

This application claims the priority of Japanese Patent Application No. 2007-228651 filed on September 4, 2007, which is incorporated herein by reference.

### FIELD OF THE INVENTION

The present invention relates to a Jasminum sambac-like flavor and/or fragrance composition, and in particular relates to a Jasminum sambac-like flavor and/or fragrance composition having a natural scent or sensory impression of Jasminum sambac flower.

### BACKGROUND OF THE INVENTION

Jasminum sambac (common name :Arabian jasmine) belongs to the genus Jasminum of the family Oleaceae. Its flower scent is especially excellent, and has been loved by many people since the ancient time. The Jasminum sambac flower is also famous for being used in jasmine tea.

The scent of jasmine is utilized widely also in the flavor and fragrance industries. Generally, jasmine flavor and fragrances used in the flavor and fragrance industries have been natural jasmine flavor and fragrances extracted from Jasminum officinale or Jasminum grandiflorum or mixed flavor and fragrances which imitate such natural jasmine flavor and fragrances. Recently, natural scent (essential oils) extracted from Jasminum sambac flower and Jasminum sambac flower-like mixed flavor and fragrances are offered commercially because the Jasminum sambac scent, which has a stronger green-fruity note compared to Jasminum officinale scent, becomes an important and valuable matter in the recent scent trend wherein light and natural scent is preferred.

However, these conventional natural or mixed flavor and/or fragrances actually fail to offer a mild, fresh, and natural sensory impression which could be felt when the flowers were really blooming. Thus, there has been a strong demand for developing a flavor and fragrance composition having a mild, fresh, and natural sensory impression as being felt when Jasminum sambac flowers are blooming.

### DISCLOSURE OF THE INVENTION

### PROBLEM TO BE SOLVED BY THE INVENTION

The present invention was made in view of the background art, and the object of the invention is to provide a flavor and/or fragrance composition having a natural scent just like blooming Jasminum sambac flower.

### MEANS TO SOLVE THE PROBLEM

The present inventors have diligently studied to reproduce the scent of Jasminum sambac. As a result, they found that blending an ingredient, which had not been recognized as an ingredient for the scent of Jasminum sambac, into conventional natural or mixed flavor and fragrances of Jasminum sambac could provide a flavor and/or fragrance composition having a mild, fresh, and natural sensory impression of Jasminum sambac, and that the obtained scent was highly excellent in retention ability, thus leading to completion of the present invention.

That is, the present invention provides a Jasminum sambac-like flavor and/or fragrance composition, comprising at least one ingredient selected from the group consisting of 3,7-dimethyl-1,5-octadiene-3,7-diol, 2,6-dimethyl-1,7-octadiene-3,6-diol, and dehydrolinalool, in addition to a base composition having, as a keynote, Jasminum sambac flower-like scent.
In the flavor and/or fragrance composition of the present invention, it is preferred that the total amount of the ingredient selected from the group consisting of 3,7-dimethyl-1,5-octadiene-3,7-diol, 2,6-dimethyl-1,7-octadiene-3,6-diol, and dehydrolinalool is 0.01 to 20 % by mass of the whole flavor and/or fragrance composition.
In the flavor and/or fragrance composition of the preset invention, it is preferred that the base composition having, as a keynote, Jasminum sambac flower-like scent comprises one or more selected from the group consisting of benzyl acetate, cis-3-hexenol, cis-3-hexenyl acetate, cis-3-hexenyl benzoate, indole, linalool, and methyl anthranilate.

### EFFECT OF THE INVENTION

According to the present invention, blending the ingredient, which have not been recognized as an ingredient for the scent of Jasminum sambac, into a conventional base flavor and/or fragrance composition of Jasminum sambac flower scent can achieve the scent corresponding to the natural, mild, and fresh scent of Jasminum sambac more closely, thus it became possible to provide a novel jasmine type scent matched to the modem consumers' tastes.

### BEST MODE FOR CARRYING OUT THE INVENTION

The Jasminum sambac-like flavor and/or fragrance composition of the present invention can be obtained by blending at least one ingredient selected from the group consisting of 3,7-dimethyl-1,5-octadiene-3,7-diol, 2,6-dimethyl-1,7-octadiene-3,6-diol, and dehydrolinalool into a base which is a conventional flavor and/or fragrance composition having Jasminum sambac flower-like scent as a keynote. These ingredients are existing substances and have floral, green, and fruity notes. However, it has not been reported that these ingredients were found to be the ingredients for Jasminum sambac scent.

The amount of each 3,7-dimethyl-1,5-octadiene-3,7-diol and 2,6-dimethyl-1,7-octadiene-3,6-diol is preferably 0.03 to 20 % by mass of the whole flavor and/or fragrance composition, more preferably 0.2 to 10 % by mass, and most preferably 1 to 3 % by mass. The amount of dehydrolinalool is preferably 0.01 to 10 % by mass, more preferably 0.05 to 3 % by mass, and most preferably 0.1 to 1 % by mass.
When the amount is too small, effects of the present invention may not be achieved. When the amount is too large, the scent may become ill-or-off-balanced and far from the mild, fresh, and natural sensory impression of Jasminum sambac.

The effects of the present invention can be produced by bending at least one of 3,7-dimethyl-1,5-octadiene-3,7-diol, 2,6-dimethyl-1,7-octadiene-3,6-diol, and dehydrolinalool within the above-mentioned range. However, comparing some flavor and/or fragrance compositions wherein the total amount of the ingredient(s) in each composition is equal to each other, the composition containing two or more ingredients in combination is preferable, and the composition containing all of the three ingredients is even more preferable. In such case, it is generally more preferred that the amount of dehydrolinalool is equal to or less than the total amount of 3,7-dimethyl-1,5-octadiene-3,7-diol and 2,6-dimethyl-1,7-octadiene-3,6-diol (hereinafter, these two ingredients may be referred as "diol ingredients").
The total amount of 3,7-dimethyl-1,5-octadiene-3,7-diol, 2,6-dimethyl-1,7-octadiene-3,6-diol, and dehydrolinalool is preferably 0.01 to 20 % by mass of the whole flavor and/or fragrance composition, and more preferably 0.05 to 5 % by mass, and most preferably 1 to 3 % by mass. When the amount is too small, effects of the present invention may not be achieved. When the amount is too large, the scent may become ill-or-off-balanced and far from the mild, fresh, and natural sensory impression of Jasminum sambac.

In the present invention, as the base flavor and/or fragrance composition, any known flavor and fragrance compositions having, as a keynote, Jasminum sambac flower-like scent can be used; however, it preferably contains one or more selected from the group consisting of benzyl acetate, cis-3-hexenol, cis-3-hexenyl acetate, cis-3-hexenyl benzoate, indole, linalool, and methyl anthranilate.

In the flavor and fragrance composition according to the preset invention, other ingredients can be blended within the range that the Jasminum sambac-like scent does not deteriorate. Examples thereof include surfactants such as polyoxyethylene lauryl sulfate, solvents such as dipropylene glycol and diethyl phthalate, and flavor and fragrance materials such as damascone, hexyl cinnamic aldehyde, lemon oil, and rose oil
The flavor and/or fragrance composition of the present invention obtained as mentioned above can be used as a scent component for various products such as cosmetics, air fresheners, hygiene materials, foods, etc..

### EXAMPLES

The present invention will be further illustrated in the following examples. However it is to be understood that these examples should not limit the scope of the present invention. Unless otherwise noted, the blending amount is represented as mass %, which means a ratio of an ingredient in the system to which the ingredient is blended. The base flavor and fragrance composition and the test method used are as follows.

### (1) Jasminum sambac flower-like base fragrance composition

The following Jasminum sambac flower-like base-fragrance composition was used.

| Ingredients | Amount (mass %) |
|---|---|
| Benzyl acetate | 19.3 |
| Benzyl alcohol | 7.5 |
| Cis-3-hexenol | 0.5 |
| Cis-3-hexenyl acetate | 2.5 |
| Cis-3-hexenyl benzoate | 8.0 |
| Famesene | 15.0 |
| Indole | 4.0 |
| Linalool | 24.0 |
| Methyl anthranilate | 10.0 |
| Nerolidol | 4.0 |
| Rose base | 5.0 |
| Cis-Jasmone | 0.2 |
| Total | 100.0 |

### (2) Test method (Scent, Retention Ability/Substantivity)

The test was conducted by seven special panelists according to the following evaluation criteria.

### (Evaluation criteria for scent)

5: A composition has highly excellent natural Jasminum sambac-like scent.
4: A composition has excellent natural Jasminum sambac-like scent.
3: A composition has natural Jasminum sambac-like scent.
2: A composition has a little natural Jasminum sambac-like scent.
1: A composition has very little natural Jasminum sambac-like scent.

### (Evaluation criteria for retention ability/substantivity)

4: A composition has highly excellent retention ability/substantivity or long-lasting effect of the natural Jasminum sambac-like scent.
3: A composition has excellent retention ability/substantivity or long-lasting effect of the natural Jasminum sambac-like scent.
2: A composition has a little long-lasting effect of the natural Jasminum sambac-like scent.
1: A composition does not have long-lasting effect of the natural Jasminum sambac-like scent.

### Test Example 1 Effect of adding scent ingredients

3,7-dimethyl-1,5-octadiene-3,7-diol, 2,6-dimethyl-1,7-octadiene-3,6-diol, or dehydrolinalool was blended to the above-mentioned base fragrance composition, and the obtained compositions were evaluated.
According to the result, as shown in Table 1, the natural Jasminum sambac-like scent could be provided by blending 3,7-dimethyl-1,5-octadiene-3,7-diol, 2,6-dimethyl-1,7-octadiene-3,6-diol, or dehydrolinalool. Moreover, the scent obtained by blending each scent ingredient had a long-lasting scent without varying over time.

**Table 1**

| Ingredients | Test Example | | | |
|---|---|---|---|---|
| | 1-1 | 1-2 | 1-3 | 1-4 |
| Base fragrance composition | 100 | 99 | 99 | 99.75 |
| 3,7-Dimethyl-1,5-octadiene-3,7-diol | - | 1 | - | - |
| 2,6-Dimethyl-1,7-octadiene-3,6-diol | - | - | 1 | - |
| Dehydrolinalool | - | - | - | 0.25 |
| Scent impression Evaluation for scent impression (average) | 1.86 | 4.86 | 4.57 | 4.71 |
| Evaluation for retention ability (average) | 1.71 | 4.00 | 3.86 | 3.57 |

Subsequently, the test was conducted with use of different amounts of each ingredient. According to Tables 2 and 3, it is found that the amount of each 3,7-dimethyl-1,5-octadiene-3,7-diol and 2,6-dimethyl-1,7-octadiene-3,6-diol is preferably 0.03 to 20 % by mass of the flavor and/or fragrance composition, more preferably 0.2 to 10 % by mass, and most preferably 1 to 3 % by mass. According to Table 4, it is found that the amount of dehydrolinalool is preferably 0.01 to 10 % by mass of the flavor and/or fragrance composition, more preferably 0.05 to 3 % by mass, and most preferably 0.1 to 1 % by mass.

**Table 2**

| Ingredients | Test Example | | | | | | |
|---|---|---|---|---|---|---|---|
| | 2-1 | 2-2 | 2-3 | 2-4 | 2-5 | 2-6 | 2-7 |
| Base fragrance composition | 100 | 99.97 | 99.8 | 99 | 97 | 90 | 80 |
| 3,7-Dimethyl-1,5-octadiene-3,7-diol | - | 0.03 | 0.2 | 1 | 3 | 10 | 20 |
| Evaluation for scent impression (average) | 1.86 | 3 | 3.86 | 4.86 | 4.57 | 4.14 | 3.57 |
| Evaluation for retention ability (average) | 1.71 | 2.43 | 3.43 | 4.00 | 4.00 | 4.00 | 3.29 |

**Table 3**

| Ingredients | Test Example | | | | | | |
|---|---|---|---|---|---|---|---|
| | 3-1 | 3-2 | 3-3 | 3-4 | 3-5 | 3-6 | 3-7 |
| Base fragrance composition | 100 | 99.97 | 99.8 | 99 | 97 | 90 | 80 |
| 2,6-Dimethyl-1,7-octadiene-3,7-diol | - | 0.03 | 0.2 | 1 | 3 | 10 | 20 |
| Evaluation for scent impression (average) | 1.86 | 3.29 | 3.86 | 4.57 | 4.43 | 4.14 | 3.14 |
| Evaluation for retention ability (average) | 1.71 | 2.29 | 3.43 | 3.86 | 4.00 | 3.86 | 3.29 |

**Table 4**

| Ingredients | Test Example | | | | | | |
|---|---|---|---|---|---|---|---|
| | 4-1 | 4-2 | 4-3 | 4-4 | 4-5 | 4-6 | 4-7 |
| Base fragrance composition | 100 | 99.99 | 99.95 | 99.9 | 99 | 97 | 90 |
| Dehydrolinalool | - | 0.01 | 0.05 | 0.1 | 1 | 3 | 10 |
| Evaluation for scent impression (average) | 1.86 | 3.14 | 3.86 | 4.14 | 4.43 | 3.71 | 3.14 |
| Evaluation for retention ability (average) | 1.71 | 2.00 | 2.57 | 3.14 | 3.71 | 3.43 | 3.00 |

### Test Example 2 Combination use of scent ingredients

The compositions wherein the scent ingredients were used in combination were also studied. As showed in Fig.5, it was found that the compositions wherein a plurality of the scent ingredients were used in combination could achieve higher effects even if the total amount of the scent ingredients in each composition was equal.
Here, though Test Examples 5-5 to 5-8 had almost even score according to the evaluation criteria, Test Example 5-8, in which all of the three scent ingredients were blended, was the most excellent in scent and retention ability among Test Examples 5-5 to 5-8 as these Test Examples were compared by the professional panelists.

**Table 5**

| Ingredients | Test Example | | | | | | | |
|---|---|---|---|---|---|---|---|---|
| | 5-1 | 5-2 | 5-3 | 5-4 | 5-5 | 5-6 | 5-7 | 5-8 |
| Base fragrance composition | 100 | 98 | 98 | 98 | 98 | 98 | 98 | 98 |
| 3,7-Dimethyl-1,5-octadiene-3,7-diol | - | 2 | - | - | 1 | - | 1.8 | 0.8 |
| 2,6-Dimethyl-1,7-octadiene-3,6-diol | - | - | 2 | - | 1 | 1.8 | - | 1 |
| Dehydrolinalool | - | - | - | 2 | - | 0.2 | 0.2 | 0.2 |
| Evaluation for scent impression (average) | 1.86 | 4.86 | 4.57 | 3.86 | 5.00 | 5.00 | 5.00 | 5.00 |
| Evaluation for retention ability (average) | 1.71 | 4.00 | 4.00 | 3.71 | 4.00 | 4.00 | 4.00 | 4.00 |

Subsequently, in Test Example 5-8, the test was conducted with use of different amounts of the mixture of 3,7-dimethyl-1,5-octadiene-3,7-diol, 2,6-dimethyl-1,7-octadiene-3,6-diol, and dehydrolinalool.
According to the result, as showed in the following Fig.6, it was found that the total amount of these scent ingredients is preferably 0.01 to 20 % by mass of the flavor and/or fragrance composition, more preferably 0.05 to 5 % by mass, and most preferably 1 to 3 % by mass.

**Table 6**

| Ingredients | Test Example | | | | | | | |
|---|---|---|---|---|---|---|---|---|
| | 6-1 | 6-2 | 6-3 | 6-4 | 6-5 | 6-6 | 6-7 | 6-8 |
| Base fragrance composition | 100 | 99.99 9 | 99.95 | 98.88 | 97.75 | 97 | 95 | 80 |
| Scent ingredients * | - | 0.001 | 0.05 | 1.12 | 2.25 | 3 | 5 | 20 |
| Evaluation for scent (average) | 1.86 | 2.00 | 4.57 | 4.71 | 5.00 | 5.00 | 4.57 | 3.43 |
| Evaluation for retention ability (average) | 1.71 | 1.71 | 3.43 | 4.00 | 4.00 | 4.00 | 4.00 | 3.29 |

| | | | | | | | | |
|---|---|---|---|---|---|---|---|---|
| * a mixture of 3,7-dimethyl-1,5-octadiene-3,7-diol : 2,6-dimethyl-1,7-octadiene-3,6-diol : dehydrolinalool = 1 : 1 : 0.25 (mass ratio) | | | | | | | | |

### INDUSTRIAL APPLICABILITY

The Jasminum sambac-like flavor and/or fragrance composition of the present invention can be applied in not only bath preparation, perfume, eau de cologne, and fragrance, but also cosmetics such as ointment, cream, milky lotion, lotion, pack, foundation, cheek color, face powder, eye shadow, lip rouge, oil removing paper, paper powder, shampoo, rinse, hair spray, antiperspirant spray, body powder, and baby powder; paper products such as tissue paper and paper towel, napkin, notebook, and memo pad; miscellaneous daily goods such as dust cloth, toothpaste, mask, gauze for medical use, fabric softener, detergent for clothes, detergent for kitchen, and air freshener; and foods. When the fragrance composition is blended in a cosmetic, the amount is not limited in particular; however, it can be within a normal range, for example, 0.001 to 50 % by mass of the whole cosmetic.

## Claims

1. A Jasminum sambac-like flavor and/or fragrance composition, comprising at least one ingredient selected from the group consisting of 3,7-dimethyl-1,5-octadiene-3,7-diol, 2,6-dimethyl-1,7-octadiene-3,6-diol, and dehydrolinalool, in addition to a base composition having, as a keynote, Jasminum sambac flower-like scent.

2. The flavor and/or fragrance composition according to claim 1, wherein the total amount of the ingredient selected from the group consisting of 3,7-dimethyl-1,5-octadiene-3,7-diol, 2,6-dimethyl-1,7-octadiene-3,6-diol, and dehydrolinalool is 0.01 to 20 % by mass of the whole flavor and/or fragrance composition.

3. The flavor and/or fragrance composition according to claim 1 or 2, wherein the base composition having, as a keynote, Jasminum sambac flower-like scent comprises one or more selected from the group consisting of benzyl acetate, cis-3-hexenol, cis-3-hexenyl acetate, cis-3-hexenyl benzoate, indole, linalool, and methyl anthranilate.

## Amended claims

### Amended claims under Art. 19.1 PCT

1. (amended) A Jasminum sambac-like flavor and/or fragrance composition, comprising at least one ingredient selected from the group consisting of 2,6-dimethyl-1,7-octadiene-3,6-diol and dehydrolinalool, in addition to a base composition having, as a keynote, Jasminum sambac flower-like scent.

2. (amended) The flavor and/or fragrance composition according to claim 1, further comprising 3,7-dimethyl-1,5-octadiene-3,7-diol.

3. (amended) The flavor and/or fragrance composition according to claim 1 or 2, wherein a total amount of the ingredient selected from the group consisting of 3,7-dimethyl-1,5-octadiene-3,7-diol, 2,6-dimethyl-1,7-octadiene-3,6-diol, and dehydrolinalool is 0.01 to 20 % by mass of the whole flavor and/or fragrance composition.

4. (amended) The flavor and/or fragrance composition according to any one of claims 1 to 3, wherein the base composition having, as a keynote, Jasminum sambac flower-like scent comprises one or more selected from the group consisting of benzyl acetate, cis-3-hexenol, cis-3-hexenyl acetate, cis-3-hexenyl benzoate, indole, linalool, and methyl anthranilate.

## Amended claims

### Amended claims under Art. 19.1 PCT

1. was amended so that the ingredient added to the base composition is limited to "at least one ingredient selected from the group consisting of 2,6-dimethyl-1,7-octadiene-3,6-diol and dehydrolinalool".

2. was amended to claim the Jasminum sambac-like flavor and/or fragrance composition of the above-mentioned claim 1, further comprising "3,7-dimethyl-1,5-octadiene-3,7-diol".
Original claims 2 and 3 were renumbered as claims 3 and 4, respectively.
